# EUROPÄISCHE PATENTANMELDUNG

(11) **EP 0 755 040 A2**
(43) Veröffentlichungstag der Anmeldung: **22.01.1997**
(21) Anmeldenummer: 96111492.3
(22) Anmeldetag: 17.07.1996
(51) Int. Cl.: G09F 13/18

(54) **Leuchtplatte**

(30) Priorität: 20.07.1995 DE 19526498
(71) Anmelder: Müller, Gerhard, 70794 Filderstadt (DE)
(72) Erfinder: Müller, Gerhard, 70794 Filderstadt (DE)
(74) Vertreter: Becker, Maria, Dipl.-Phys.

(57) **Zusammenfassung**

Um bei einer kantenbelichteten Leuchtplatte für Leuchtschilder, Leuchttische und dergleichen Vorrichtungen eine möglichst gleichmäßige Ausleuchtung einer oder beider Plattensichtflächen (16) zu erreichen, ist diese zumindest bereichsweise mit den Strahlengang des Lichtes reflektierenden, lichtdurchlässigen Elementen (22) in dichter Verteilung versehen. Die Ausstattung der Leuchtplatte mit solchen reflektierenden Elementen (22) läßt sich in einfacher Weise bewerkstelligen, indem diese auf die auszuleuchtende Sichtfläche (22) aufgetragen vorzugsweise aufgedruckt werden. Eine optimal gleichmäßige Lichtverteilung auf der Sichtfläche (22) läßt sich dabei erzielen, wenn die Größe der reflektierenden Elemente (22) in Strahlrichtung des Lichts kontinuierlich zunimmt.

## Beschreibung

Die Erfindung betrifft eine kantenbelichtete Leuchtplatte für Leuchtschilder, Leuchttische und dergleichen Vorrichtungen, mit zumindest bereichsweise den Strahlengang des Lichtes reflektierenden, lichtdurchlässigen Elementen in dichter Verteilung.

Leuchtplatten dieser Art sind bekannt (vgl. Prospekt der Firma Röhm - Sonderdruck April 1995). Sie sind aus farblosem, durchsichtigem Acrylglas gefertigt, in das den Strahlengang des Lichtes reflektierende, durchsichtige Perlen in gleichmäßiger Verteilung eingebracht sind, die aus einem Acrylglas mit geringfügig abweichender Lichtbrechzahl bestehen.

Durch den Einschluß dieser Perlen in die Acrylglasplatte wird der Effekt erzielt, daß über die gesamte Oberfläche der Plattenflachseiten verteilt Lichtstrahlen in den die Leuchtplatte umgebenden Raum austreten, obgleich das Licht durch eine einer Plattenkante benachbarten Lichtquelle in diese eingeleitet wird.

Die in die Acrylglasplatte integrierten Acrylglasperlen bewirken dabei einen Lichtaustritt, der eine Ausleuchtung eines der Leuchtplatte vorgeschalteten Informationsträgers sicherstellt, die für alle Beobeachtungsrichtungen eine leuchtend helle Darstellung der zu vermittelnden Informationen gewährleistet.

Die Fertigung solcher Acrylglasplatten mit einzulagernden Perlen größerer Lichtbrechzahl gestaltet sich entsprechend aufwendig.

Es ist deshalb Aufgabe der Erfindung, die Herstellung solcher Leuchtplatten zu vereinfachen.

Diese Aufgabe wird erfindungsgemäß durch die kennzeichnenden Merkmale des Anspruches 1 gelöst.

Die Ausstattung der Leuchtplatte mit reflektierenden, lichtdurchlässigen Elementen läßt sich hierbei besonders einfach gemäß Anspruch 2, insbesondere im Siebdruckverfahren, bewerkstelligen.

Sofern hierbei die aufgedruckten reflektierenden Elemente größenmäßig gemäß Anspruch 3 vorgesehen werden, ergibt sich der bedeutende Vorteil, daß bei einer entsprechenden Abstimmung der sich verändernden Größe der reflektierenden Elemente auch in von der Lichtquelle weit entfernt liegenden Bereichen der Plattensichtfläche sich die Lichtintensität im wesentlichen derjenigen der lichtquellennahen Sichtflächenbereiche angleichen und somit bei geringstem Energieaufwand eine gleichmäßige ganzflächige Ausleuchtung von Informationsträgern erzielen läßt.

Hierbei empfiehlt sich, die reflektierenden Elemente in der in Anspruch 4 erläuterten Art auf die Plattensichtfläche aufzutragen, wobei es günstig ist, den Anteil der Sichtfläche, der mit reflektierenden Elementen zu belegen ist, gegenüber deren von Elementen freien Flächenanteil prozentual gemäß Anspruch 5 zu wählen.

Eine optimale Lichtdurchflutung der Leuchtplatte läßt sich durch eine Zuordnung einander benachbarter reflektierender Elemente gemäß Anspruch 6 erzielen, wobei es sich als günstig erwiesen hat, den reflektierenden Elementen eine in Strahlrichtung des Lichtes längliche Umfangsform zu geben und die Elemente in einer Ausbildung und Anordnung gemäß den Ansprüchen 7 und 8 vorzusehen.

In weiterer Ausgestaltung der Erfindung empfiehlt sich zwecks konzentrierter Lichtausbeute eine Maßnahme gemäß Anspruch 9. Dabei kann die Leuchtscheibe ein- oder beidseitig abstrahlend ausgebildet sein, wobei im ersteren Falle die eine Scheibenflachseite lichtdicht und reflektierend auszubilden, insbesondere zu beschichten ist.

Anstelle einer ganzflächigen Ausleuchtung der Plattensichtfläche ist es auch denkbar, wie in Anspruch 10 vorgeschlagen, die reflektierenden Elemente lediglich auf graphische Darstellungen begrenzende Flächenteile auf der Sichtfläche zu beschränken und den restlichen Anteil der Sichtfläche mit einer reflektierenden Beschichtung zu versehen, so daß darauf verzichtet werden kann, der sichtfläche einen speziellen Informationsträger vorzuschalten.

In der Zeichnung ist ein bevorzugtes Ausführungsbeispiel einer erfindungsgemäßen Leuchtplatte dargestellt. Es zeigen, stark schematisiert:
- Figur 1: einen Querschnitt der Leuchtplatte, in der Höhe stark verkürzt dargestellt;
- Figur 2: eine stark vergrößerte Darstellung der reflektierenden Elemente im Bereich der beleuchteten Plattenkante;
- Figur 3: eine Darstellung ähnlich Figur 2 zur Veranschaulichung der Größe der reflektierenden Elemente im Bereich der der beleuchteten Plattenkante gegenüberliegenden Plattenkante.

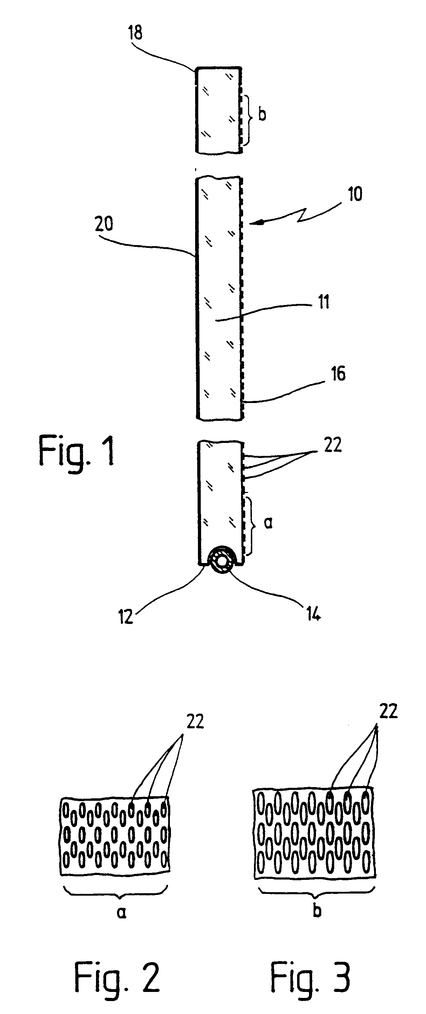

Die in Figur 1 im Querschnitt gezeigte Leuchtplatte 10 weist z. B. einen ebenen, klar durchsichtigen Plattenkörper 11 aus Acrylglas auf, der beispielsweise Rechteckform besitzt. Seiner unteren Längskante 12 ist eine sogenannte Miniatur-Leuchtstofflampe 14 zugeordnet, die vorzugsweise zum Teil in geeigneter Weise in die Längskante 12 eingelassen ist.

An ihrem von der Leuchtplatte 10 abgekehrten Umfangsteil kann diese mit einer reflektierenden Beschichtung versehen sein.

Die Leuchtplatte 10 kann beispielsweise eine Komponente eines Hinweis- bzw. Informationsschildes oder dergleichen Vorrichtung bilden, mit deren Hilfe der leuchtende Hintergrund für einen deren Sichtseite 16 vorgeordneten Informationsträger, z. B. in Art eines Dias oder dergleichen, geschaffen wird.

Damit der an der Kante 12 eintretende Lichtstrom zur Beleuchtung eines Informationsträgers optimal nutzbar ist, sind vorzugsweise alle übrigen Plattenkanten reflektierend verspiegelt, wozu auf diese z. B. ein geeignetes Bandmaterial 10 mit reflektierenden Eigenschaften aufgebracht sein kann.

Die der Plattensichtseite 16 gegenüberliegende Plattenseite ist im vorliegenden Falle mit einer lichtdichten, stark reflektierenden Beschichtung 20 versehen. Es ist natürlich denkbar, auch diese Plattenseite lichtdurchlässig zu belassen und dieser einen entsprechenden Informationsträger vorzuordnen.

Normalerweise verringert sich die Gleichmäßigkeit der Ausleuchtung der Sichtfläche 16 in Strahlrichtung des Lichtes. Um diesen Nachteil zu vermeiden, sind in geeigneter Weise auf die Oberfläche der Plattensichtseite 16 reflektierende, lichtdurchlässige Elemente 22 aufgetragen, vorzugsweise aufgedruckt.

Diese Elemente führen aufgrund einer vom Acrylglas abweichenden Lichtbrechung zu einer flächenmäßig besseren Lichtausbeute durch entsprechende Lichtreflexionen.

Dieser Effekt ließ sich in herstellungstechnischer Hinsicht durch die Anordnung der reflektierenden Elemente 22 auf der Plattensichtseite 16 in besonders einfacher Weise erzielen. Durch eine besondere Ausbildung und durch auf Lücke versetzte Anordnung der reflektierenden Elemente 22 konnte hierbei eine optimal gleichmäßig starke Lichtverteilung über die gesamte Plattensichtfläche 16 erzielt werden, was aus den Figuren 2 und 3 ersichtlich ist.

Figur 2 zeigt hierbei einen Sichtflächenausschnitt a im Bereich der Miniatur-Leuchtstofflampe 14, während Figur 3 einen ebensolchen Ausschnitt b im Bereich der durch das Bandmaterial 18 abgedeckten oberen Plattenlängskante veranschaulicht.

Diese Besonderheit in der Ausbildung der reflektierenden Elemente 22 beruht darauf, daß deren Größe in Strahlrichtung des Lichtes kontinuierlich zunimmt, wodurch u. a. deren Reflexionsgrad entsprechend verstärkt wird. Zugleich konnte festgestellt werden, daß sich eine in Strahlrichtung des Lichtes längliche Gestaltung der reflektierenden Elemente 22 in dieser Hinsicht noch begünstigend auswirkt, was jedoch nicht ausschließen soll, daß auch andere Umfangsformen sich in gleicher Weise vorteilhaft auswirken können.

Der Aufdruck der reflektierenden Elemente 22 läßt sich hierbei als sogenanntes Verlaufsraster auf die Plattensichtfläche 16 bewerkstelligen, wobei als Material für den Aufdruck vorzugsweise Farbpigmente oder fluoreszierende Kristalle bevorzugt zum Einsatz gelangen können, die mittels eines geeigneten Haftvermittlers auf der Oberfläche der Plattensichtseite 16 gehalten werden.

Der Aufdruck der Rasterpunkte 22 kann im Offsettverfahren erfolgen. Stattdessen könnten diese auch durch Aufreiben transferiert oder durch Beschichtung mittels einer Folie auf die transparente Leuchtfläche aufgebracht werden.

Alternativ zur beschriebenen Konstruktion gemäß Figur 1 ist es denkbar, beide, einander gegenüberliegenden Längskanten jeweils eine Miniatur-Leuchtstofflampe zuzuordnen, was sich insbesondere für Leuchtplatten großer Höhe empfiehlt. In diesem Falle wird man die reflektierenden Elemente 22 gleichfalls so anordnen, daß deren Größe in Strahlrichtung der jeweiligen Lichtquelle kontinuierlich zunimmt. In diesem Falle werden sich somit die reflektierenden Elemente 22 in ihrer größten Ausbildung gemäß Figur 3 im mittleren Bereich der Plattensichtfläche 16 befinden und damit gleichfalls eine hervorragende Vergleichmäßigung der Plattenausleuchtung gewährleisten.

Schließlich ist es denkbar, ohne Einbuße an Intensität des austretenden Lichtes die Leuchtplatte derart zu krümmen, daß deren Plattensichtfläche 16 beispielsweise in der Zeichenebene gemäß Figur 1 konvex verläuft.

## Patentansprüche

1. Kantenbelichtete Leuchtplatte (10) für Leuchschilder, Leuchttische und dergleichen Vorrichtungen, mit zumindest bereichsweise den Strahlengang des Lichtes reflektierenden, lichtdurchlässigen Elementen (22) in dichter Verteilung,
**dadurch gekennzeichnet, daß**
die reflektierenden Elemente (22) auf mindestens eine Sichtfläche (16) der Leuchtplatte (10) aufgetragen sind.

2. Leuchtplatte nach Anspruch 1, dadurch gekennzeichnet, daß die reflektierenden Elemente (22) auf die Sichtfläche (16) der Leuchtplatte (10) aufgedruckt sind.

3. Leuchtplatte nach Anspruch 1 oder 2, dadurch gekennzeichnet, daß die Größe der reflektierenden Elemente(22) in Strahlrichtung des Lichtes kontinuierlich zunimmt.

4. Leuchtplatte nach Anspruch 3, dadurch gekennzeichnet, daß die reflektierenden Elemente (22) in Art eines Verlaufsrasters auf die Sichtfläche (16) der Leuchtplatte (10) aufgetragen sind.

5. Leuchtplatte nach einem der vorhergehenden Ansprüche 2 bis 4, dadurch gekennzeichnet, daß der mit reflektierenden Elementen (22) belegte Anteil der Sichtfläche (16) der Leuchtplatte (10) gegenüber derem von reflektierenden Elementen (22) freiem Flächenanteil zwischen 35% und 60%, vorzugsweise 45%, beträgt.

6. Leuchtplatte nach einem der vorhergehenden Ansprüche, dadurch gekennzeichnet, daß einander benachbarte, reflektierende Elemente (22) auf Lücke zueinander versetzt angeordnet sind.

7. Leuchtplatte nach einem der vorhergehenden Ansprüche, dadurch gekennzeichnet, daß die reflektierenden Elemente (22) durch auf der Sichtfläche (16) der Leuchtplatte (10) mittels eines Bindemittels festgelegte Farbpigmente gebildet sind.

8. Leuchtplatte nach einem der vorhergehenden Ansprüche 1 bis 6, dadurch gekennzeichnet, daß die reflektierenden Elemente (22) durch auf der Sichtfläche (16) der Leuchtplatte (10) mittels eines Bindemittels festgelegte fluoreszierende Kristalle gebildet sind.

9. Leuchtplatte nach einem der vorhergehenden Ansprüche, dadurch gekennzeichnet, daß zumindest die einer stabförmigen Lichtquelle (14) gegenüberliegende Kante der Leuchtplatte (10) reflektierend (Bandmaterial 18) abgedeckt ist.

10. Leuchtplatte nach einem der vorhergehenden Ansprüche, dadurch gekennzeichnet, daß die reflektierenden Elemente (22) auf der Sichtfläche (16) der Leuchtplatte (10) lediglich auf graphische Elemente begrenzenden Flächenteilen aufgebracht sind.

11. Leuchtplatte nach Anspruch 1, dadurch gekennzeichnet, daß die reflektierenden Elemente (22) auf die Leuchtfläche (16) der Leuchtplatte (10) durch Aufreiben transferiert sind.

12. Leuchtplatte nach Anspruch 1, dadurch gekennzeichnet, daß die reflektierenden Elemente (22) auf die Leuchtfläche (16) der Leuchtplatte (10) mittels einer Folienbeschichtung aufgebracht sind.
